# EUROPEAN PATENT APPLICATION

(11) **EP 3 611 682 A1**
(43) Date of publication of application: **19.02.2020**
(21) Application number: 18215900.4
(22) Date of filing: 26.12.2018
(51) Int. Cl.: G06Q 20/18, G06Q 30/06

(54) **METHOD FOR SELLING ELECTRONIC CIGARETTE, TERMINAL, STORAGE MEDIUM AND ELECTRONIC CIGARETTE**

(30) Priority: 17.08.2018 CN 201810942773
(71) Applicant: Shenzhen IVPS Technology Co., Ltd., 518000 Shenzhen Guangdong (CN)
(72) Inventor: OUYANG, Junwei, Shenzhen, Guangdong 518000 (CN)
(74) Representative: IP-PAL Patent & Trademark Attorneys GmbH

(57) **Abstract**

The present invention discloses a selling method for an electronic cigarette based on face recognition, comprising the steps of: acquiring user image information, extracting facial feature information in user image information, analyzing the age of the user according to the facial feature information; determining whether the age of the user is within a preset age range; and if the user is within a preset age range, generating an instruction of approving selling an electronic cigarette. The present invention further discloses a selling terminal for an electronic cigarette based on face recognition, and a computer readable storage medium. The present invention effectively solves the inadequacies that the current selling method for an electronic cigarette is original and the use of electronic cigarettes cannot be limited for minors.

## Description

### TECHNICAL FIELD

The present invention relates to the technical field of electronic cigarettes, and in particular, to a selling method for an electronic cigarette based on face recognition, a selling terminal, and a computer readable storage medium.

### BACKGROUND

Electronic cigarettes are a relatively mature alternative to smoking on the market. After controlling to start the electronic cigarette, the battery heating element atomizes the tobacco tar in the atomizer to form smoke harmless to the human body. The smoker does not absorb tar and other harmful substances in the traditional cigarette when experiencing the smoking fun. Therefore, with the improvement of health awareness of people, especially small electronic cigarettes are highly respected by users due to being easy to carry. At the same time, electronic cigarettes have a large amount of smoke and have high novelty of the product so that it is easy to attract minors to imitate.

However, the sales regulation of the current electronic cigarettes on the market is not perfect, and many minors can easily purchase electronic cigarette products directly, which hinders the physical and mental growth of minors.

### SUMMARY

The main object of the present invention is to provide a selling method for an electronic cigarette based on face recognition, a selling terminal, and a computer readable storage medium, which aims to solve the inadequacies that the current selling method for an electronic cigarette is original and the use of electronic cigarettes cannot be limited for minors.

To achieve the above object, the present invention provides a selling method for an electronic cigarette based on face recognition, comprising the steps of:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette.

Preferably, the step of extracting facial feature information in user image information, analyzing the age of the user according to the facial feature information, and determining whether the age of the user is within a preset age range further comprises:
if the age of the user is not within a preset age range, recording the current number of times that user image information is acquired;
determining whether the number of times is greater than a preset threshold; and
if the number of times is greater than a preset threshold, limiting the operation of acquiring user image information.

Preferably, it is determined whether the age of the user is within a preset age range; if the age of the user is not within a preset age range, it is determined whether to switch to the identity information verification mode;
if switched to the identity information verification mode, the user identity information is acquired and the user identity information is matched with the standard identity information database, it is determined whether there is standard identity information matching the user identity information in the standard identity information database;
if there is standard identity information, the standard identity information is extracted and it is determined whether the age in the standard identity information is within a preset age range; and
if the age in the standard identity information is within a preset age range, an instruction of approving selling an electronic cigarette is generated.

Preferably, the standard identity information database comprises: a resident identity card information database, a resident driving license database, a resident residence permit database, and a resident Hong Kong and Macao passport database.

Preferably, prior to the step of extracting and determining whether the age in the standard identity information is within a preset age range, the method further comprises:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of approving selling an electronic cigarette.

Preferably, the step of acquiring user image information, extracting facial feature information in the user image information, matching the facial feature information with the image information in the standard identity information, and determining whether the facial feature information and the image information belong to the same user comprises:
initially extracting facial feature information in the user image information, and matching the facial feature information with the image information in the standard identity information to determine whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

Preferably, the dynamic information comprises a blinking motion, a mouth opening motion, and a body surface temperature of the face of the user.

Preferably, subsequent to the step of determining whether the age of the user is within a preset age range, the method further comprises:
if the age of the user is within a preset age range, determining whether the corresponding user image information is stored in the preset user database; and
if it is determined that the corresponding user image information is stored in the preset user database, forming a corresponding user information account in the preset database; wherein the preset database is used for directly matching the user image information acquired subsequently.

Preferably, prior to the step of analyzing the age of the user according to the facial feature information and determining whether the age of the user is within a preset age range, the method further comprises:
determining whether there is a user information account matching the acquired user image information in the preset database; and
if there is a user information account matching the user image information in the preset database, generating an instruction of approving selling an electronic cigarette.

Preferably, a product display interface is switched for the user to view the electronic cigarette product information and purchase the electronic cigarette according to the instruction of approving selling an electronic cigarette.

Preferably, the browsing information of the user on the product display interface is acquired, and the browsed product information analysis is stored to the user information account to generate user preference information;
if the user image information matching the user information account is acquired, an instruction of approving selling an electronic cigarette equipped with the user preference information is generated, so that the product display interface preferably displays the product close to the user preference information.

Preferably, the billing information for the user to select the electronic cigarette is generated according to the instruction of approving selling an electronic cigarette;
the payment information is acquired, the payment information amount is compared with the billing information, and it is determined whether the payment information amount is greater than or equal to the amount information in the billing information; and
if it is determined that the payment information amount is greater than or equal to the amount information in the bill information, the electronic cigarette product is sold.

Preferably, the payment information comprises cash payment information, card payment information, code scanning payment information, and digital currency payment information.

Preferably, if the payment information amount is greater than or equal to the amount information in the bill information, after the electronic cigarette product is sold, a unique activation code corresponding to the electronic cigarette product is generated;
the electronic cigarette acquires the unique activation code information, and determines whether the activation code information is consistent with the unique identification code information pre-stored by the electronic cigarette; and
if the activation code information is consistent with the unique identification code information pre-stored by the electronic cigarette, the electronic cigarette is activated.

In addition, in order to achieve the above object, the present invention further provides a selling terminal for an electronic cigarette based on face recognition, wherein the selling terminal comprises a user image information collecting device, a storage, and a processor, wherein the storage is configured for storing a program of a selling method for electronic cigarette, when the program is executed by the processor, the program implements the steps of the selling method for an electronic cigarette. The selling method for an electronic cigarette based on face recognition comprises the steps of:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette.

In addition, in order to achieve the above object, the present invention further provides a computer readable storage medium, wherein the computer readable storage medium is configured for storing program of unlocking an electronic cigarette, and when being executed by the processor, the program of unlocking the electronic cigarette implements the steps of the selling method for an electronic cigarette. The selling method for an electronic cigarette based on face recognition comprises the steps of:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette.

In addition, in order to achieve the above object, the present invention further provides an electronic cigarette, wherein the electronic cigarette comprises a storage device, a processing device and an electronic cigarette activation program stored on the storage device and operable on the processing device, the unique identification code of the electronic cigarette is stored in the storage device, and when being executed by the processing device, the electronic cigarette activation program implements the steps of the selling method for an electronic cigarette. The selling method for an electronic cigarette based on face recognition comprises the steps of:
acquiring, by the electronic cigarette, the unique activation code information, and determining whether the activation code information is consistent with the unique identification code information pre-stored by the electronic cigarette; and
if the activation code information is consistent with the unique identification code information pre-stored by the electronic cigarette, activating the electronic cigarette.

The present invention acquires the user image information and extracts the facial feature information in the image information for analyzing the age of the user, and then determines whether the age of the user is within a preset age range; the preset age range may judge the age of the minors based on different national conditions, and set the legal adult age as the lower limit of the range; at the same time, the upper limit of the range is set as the safe use age to prevent the hidden danger resulted from the fact that the older people uses an inappropriately large amount of smoke of the electronic cigarette. It is further determined that the age of the user is within a preset age range to generate an instruction of approving selling an electronic cigarette. The phenomenon that minors purchase electronic cigarettes is effectively limited.

### BRIEF DESCRIPTION OF THE DRAWINGS

FIG. 1 is a schematic diagram illustrating the structure of a selling terminal in a hardware operating environment according to an embodiment of the present invention.
FIG. 2 is a schematic diagram illustrating the structure of an electronic cigarette in a hardware operating environment of an electronic cigarette in a selling system for an electronic cigarette based on face recognition according to an embodiment of the present invention.
FIG. 3 is a schematic flow diagram illustrating a first embodiment in a selling method for an electronic cigarette based on face recognition according to the present invention.

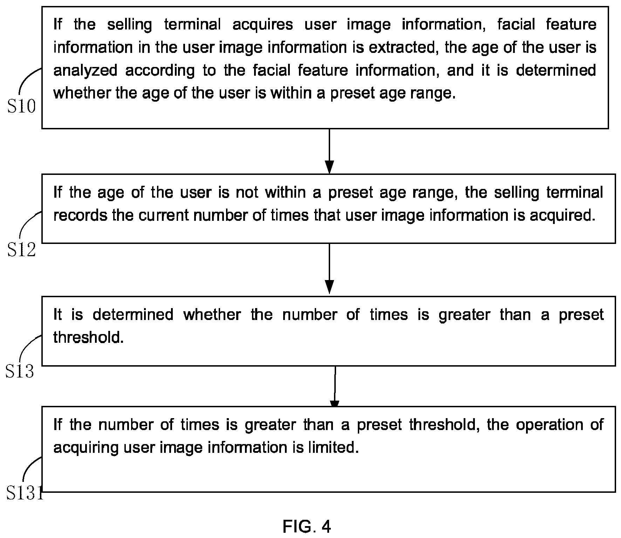

FIG. 4 is a schematic flow diagram illustrating that a selling terminal records the current number of times that user image information is acquired if the age of the user is not within a preset age range in a first embodiment of a selling method for an electronic cigarette based on face recognition according to the present invention.

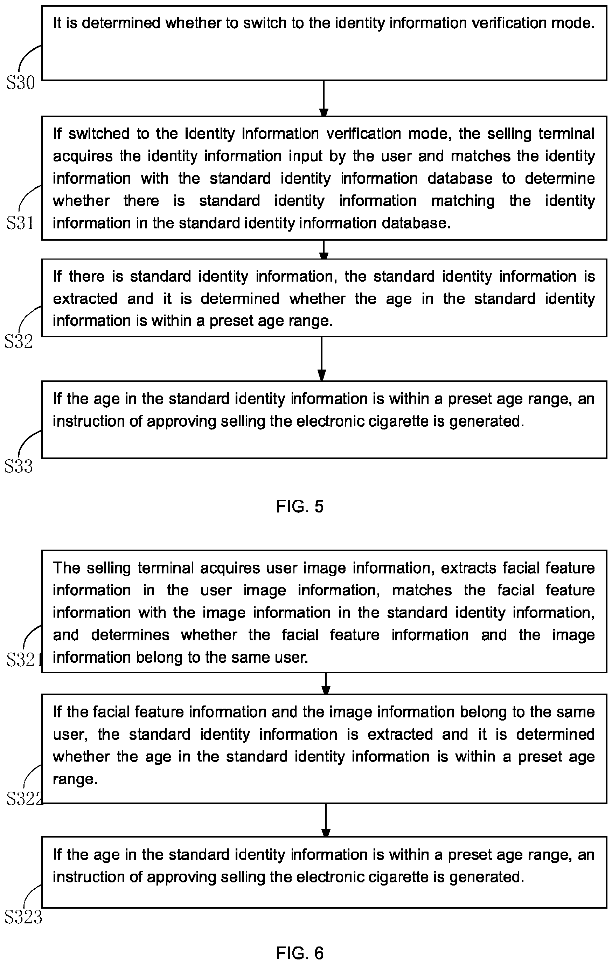

FIG. 5 is a schematic flow diagram illustrating a second embodiment of a selling method for an electronic cigarette based on face recognition according to the present invention.
FIG. 6 is a schematic flow diagram illustrating a third embodiment of a selling method for an electronic cigarette based on face recognition according to the present invention.

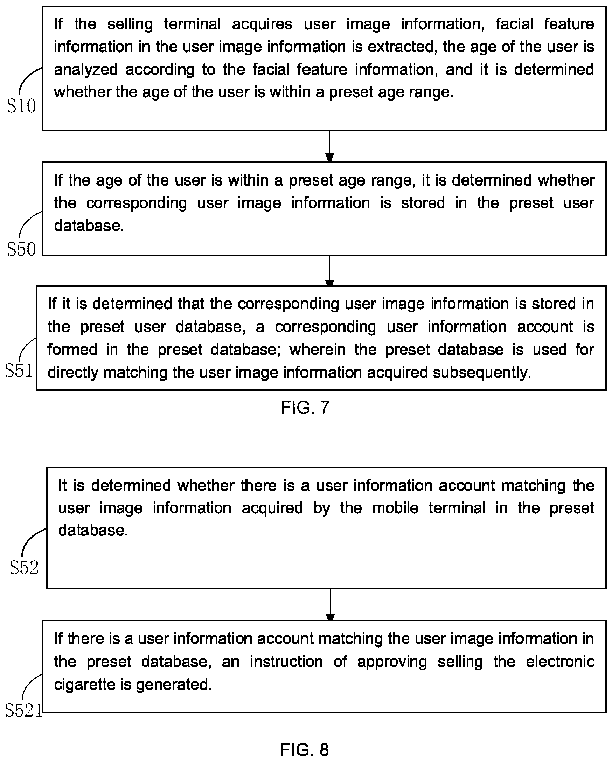

FIG. 7 is a schematic flow diagram illustrating a fourth embodiment of a selling method for an electronic cigarette based on face recognition according to the present invention.
FIG. 8 is a schematic detailed flow diagram illustrating a fourth embodiment of a selling method for an electronic cigarette based on face recognition according to the present invention.

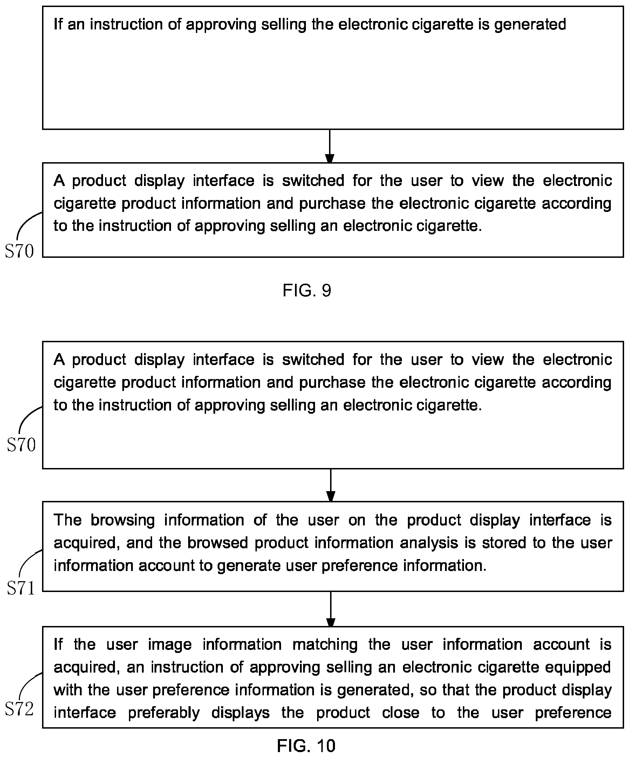

FIG. 9 is a schematic detailed flow diagram illustrating a fifth embodiment of a selling method for an electronic cigarette based on face recognition according to the present invention.
FIG. 10 is a schematic flow diagram illustrating a sixth embodiment of a selling method for an electronic cigarette based on face recognition according to the present invention.

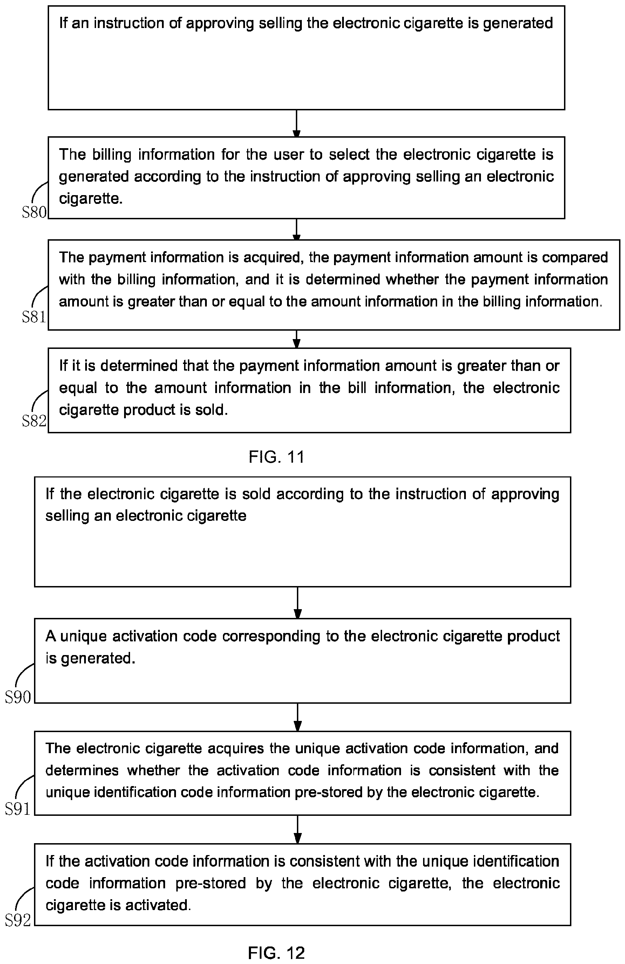

FIG. 11 is a schematic flow diagram illustrating a seventh embodiment of a selling method for an electronic cigarette based on face recognition according to the present invention.
FIG. 12 is a schematic flow diagram illustrating an eighth embodiment of a selling method for an electronic cigarette based on face recognition according to the present invention.

The implementation of aims, the function features and the advantages of the present disclosure are described below in further detail in conjunction with embodiments with reference to the drawings.

### DESCRIPTION OF THE EMBODIMENTS

It is to be understood that the specific embodiments described herein are merely illustrative of the present invention and are not intended to define the present invention.

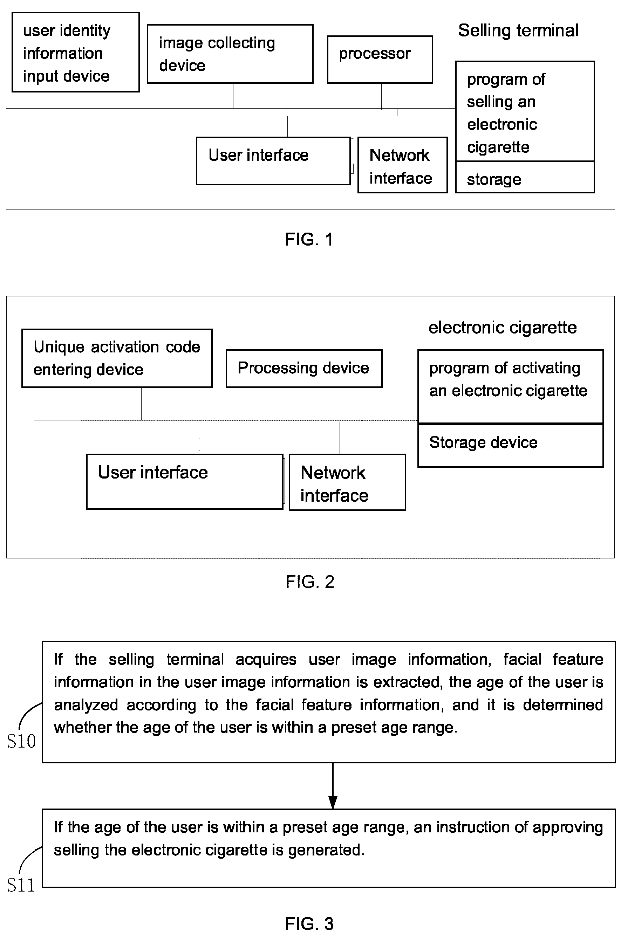

As shown in FIG. 1, FIG. 1 is a schematic diagram illustrating the structure of a selling terminal in a hardware operating environment according to an embodiment of the present invention.

The selling terminal for an electronic cigarette based on face recognition according to the embodiment of the present invention may be an intelligent sales counter, a PC, a smart phone, a tablet, etc. As shown in FIG. 1, the intelligent sales counter comprises an image capture device such as a camera, and a processor, such as a CPU, a network interface, a user interface, a storage, and a communication bus. The communication bus is configured to implement connection communication between these components. The user interface may comprise a display and an input unit such as a keyboard. Preferably, the user interface may further comprise a standard wired interface and a wireless interface. The network interface may preferably comprise a standard wired interface and a wireless interface (such as a WI-FI interface). The storage may be a high-speed RAM memory or a non-volatile memory such as a magnetic disk storage.

Further, the selling terminal may further comprise a Radio Frequency (RF) circuit, a sensor, an audio circuit, a WiFi module, etc. The example of the sensor comprises an optical sensor, a motion sensor, or other sensors, for example. Specifically, the optical sensor may comprise an ambient optical sensor, wherein the ambient optical sensor may adjust the brightness of the display according to the brightness of the ambient light.

It is to be understood by those skilled in the art that the selling terminal structure shown in FIG. 1 does not constitute a limitation to the selling terminal, and may comprise more or less components than those illustrated, or a combination of some components, or different component arrangements.

As shown in FIG. 1, the storage as a computer storage medium may comprise an operation server, a network communication module, a user interface module, and a program of selling an electronic cigarette based on face recognition.

In the selling terminal shown in FIG. 1, the network interface is mainly configured to be connected to a background server for data communication with a background server; the user interface is mainly configured to be connected to a client (a user side) for data communication with the client; and the processor may be configured to invoke a control program of an electronic cigarette stored in the storage.

The processor of the selling terminal may also invoke the program of selling an electronic cigarette based on face recognition stored in the storage to perform the following operations:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette.

Further, the processor further invokes the program of selling an electronic cigarette based on face recognition stored in the storage to perform the following operations:
the step of extracting facial feature information in user image information, analyzing the age of the user according to the facial feature information, and determining whether the age of the user is within a preset age range further comprising:
if the age of the user is not within a preset age range, recording the current number of times that user image information is acquired;
determining whether the number of times is greater than a preset threshold; and
if the number of times is greater than a preset threshold, limiting the operation of acquiring user image information.

Further, the processor further invokes the program of selling an electronic cigarette based on face recognition stored in the storage to perform the following operations:
determining whether the age of the user is within a preset age range; if the age of the user is not within a preset age range, determining whether to switch to the identity information verification mode;
if switched to the identity information verification mode, acquiring the user identity information and matching the user identity information with the standard identity information database, determining whether there is standard identity information matching the user identity information in the standard identity information database;
if there is standard identity information, extracting the standard identity information and determining whether the age in the standard identity information is within a preset age range; and
if the age in the standard identity information is within a preset age range, generating an instruction of approving selling an electronic cigarette.

Specifically, the standard identity information database comprises: a resident identity card information database, a resident driving license database, a resident residence permit database, and a resident Hong Kong and Macao passport database.

Further, the processor further invokes the program of selling an electronic cigarette based on face recognition stored in the storage to perform the following operations:
prior to the step of extracting and determining whether the age in the standard identity information is within a preset age range, further comprising:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of approving selling an electronic cigarette.

Further, the processor further invokes the program of selling an electronic cigarette based on face recognition stored in the storage to perform the following operations:
the step of acquiring user image information, extracting facial feature information in the user image information, matching the facial feature information with the image information in the standard identity information, and determining whether the facial feature information and the image information belong to the same user comprising:
initially extracting facial feature information in the user image information, and matching the facial feature information with the image information in the standard identity information to determine whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

Specifically, the dynamic information comprises a blinking motion, a mouth opening motion, and a body surface temperature of the face of the user.

Further, the processor further invokes the program of selling an electronic cigarette based on face recognition stored in the storage to perform the following operations:
subsequent to the step of determining whether the age of the user is within a preset age range, further comprising:
if the age of the user is within a preset age range, determining whether the corresponding user image information is stored in the preset user database; and
if it is determined that the corresponding user image information is stored in the preset user database, forming a corresponding user information account in the preset database; wherein the preset database is used for directly matching the user image information acquired subsequently.

Further, the processor further invokes the program of selling an electronic cigarette based on face recognition stored in the storage to perform the following operations:
prior to the step of analyzing the age of the user according to the facial feature information and determining whether the age of the user is within a preset age range, further comprising:
determining whether there is a user information account matching the acquired user image information in the preset database; and
if there is a user information account matching the user image information in the preset database, generating an instruction of approving selling an electronic cigarette.

Further, the processor further invokes the program of selling an electronic cigarette based on face recognition stored in the storage to perform the following operations:
switching a product display interface for the user to view the electronic cigarette product information and purchase the electronic cigarette according to the instruction of approving selling an electronic cigarette.

Further, the processor further invokes the program of selling an electronic cigarette based on face recognition stored in the storage to perform the following operations:
acquiring the browsing information of the user on the product display interface, and storing the browsed product information analysis to the user information account to generate user preference information;
if the user image information matching the user information account is acquired, generating an instruction of approving selling an electronic cigarette equipped with the user preference information, so that the product display interface preferably displays the product close to the user preference information.

Further, the processor further invokes the program of selling an electronic cigarette based on face recognition stored in the storage to perform the following operations:
generating the billing information for the user to select the electronic cigarette according to the instruction of approving selling an electronic cigarette;
acquiring the payment information, comparing the payment information amount with the billing information, and determining whether the payment information amount is greater than or equal to the amount information in the billing information; and
if it is determined that the payment information amount is greater than or equal to the amount information in the bill information, selling the electronic cigarette product.

Specifically, the payment information comprises cash payment information, card payment information, code scanning payment information, and digital currency payment information.

Further, the processor further invokes the program of selling an electronic cigarette based on face recognition stored in the storage to perform the following operations:
if it is determined that the payment information amount is greater than or equal to the amount information in the bill information, after the electronic cigarette product is sold, generating a unique activation code corresponding to the electronic cigarette product;
acquiring, by the electronic cigarette, the unique activation code information, and determining whether the activation code information is consistent with the unique identification code information pre-stored by the electronic cigarette; and
if the activation code information is consistent with the unique identification code information pre-stored by the electronic cigarette, activating the electronic cigarette.

The present invention further provides a selling method for an electronic cigarette based on face recognition. Referring to FIG. 2, FIG. 2 is a schematic flow diagram illustrating a first embodiment of a selling method for an electronic cigarette based on face recognition according to the present invention.

In the embodiment, if the selling terminal is an intelligent sales counter, the selling method for an electronic cigarette based on face recognition includes the following steps.

At step S10, if the selling terminal acquires user image information, facial feature information in the user image information is extracted, the age of the user is analyzed according to the facial feature information, and it is determinedwhether the age of the user is within a preset age range.

In the embodiment, an image collecting device provided in the selling terminal may collect the current image information of the user, and extract facial feature information in the image information, such as a texture feature, a brightness feature, a temperature feature, and a color feature; analyze the extracted facial feature information, estimate the age of the user, and determine whether the age of the user is within a preset age range.

At step S11, if the age of the user is within a preset age range, an instruction of approving selling an electronic cigarette is generated.

Specifically, the method for analyzing and estimating facial feature information may adopt an existing analyzing method. For example, an EHMM (Embedded Hidden Markov Model)-based age recognition method "determines the nonlinear relationship between the age and the change of the key features of the face by analyzing a large number of samples first, and establishes a nonlinear model based on the relationship; and then uses an PARI (Partial Ageing Ratio Image) to estimate the texture of the aging face; finally, uses the feature extracted from there constructed image to train the EHMM for face recognition." As another example, the face image-based age recognizing method disclosed in CN107480621 "extracts the facial feature in the face image suitable for age recognition for each sample in the sample library first, wherein the facial feature comprises: a texture feature, a brightness feature, and a color feature; generates three training sample feature matrices of the texture feature, the brightness feature, and the color feature, respectively; and then introduces an age group parameter based on the three training sample feature matrices and obtain a sparse representation of the test sample in the tolerable error range by adjusting the age group parameter; and finally, uses the multi-feature fusion to finally determine the age corresponding to the face image of the test sample based on the sparse representation," which will not be described in detail in the present invention herein.

The present invention acquires the user image information and extracts the facial feature information in the image information for analyzing the age of the user, and then determines whether the age of the user is within a preset age range; the preset age range may judge the age of the minors based on different national conditions, and set the legal adult age as the lower limit of the range; at the same time, the upper limit of the range is set as the safe use age to prevent the hidden danger resulted from the fact that the older people uses an inappropriately large amount of smoke of the electronic cigarette. It is further determined that the age of the user is within a preset age range to generate an instruction of approving selling an electronic cigarette. The phenomenon that minors purchase electronic cigarettes is effectively limited.

Specifically, subsequent to step S10, there are still the following steps.

At step S12, if the age of the user is not within a preset age range, the selling terminal records the current number of times that user image information is acquired.

In the embodiment, when being not within the preset age range, it indicates that the acquired user image information does not satisfy the condition, and the unlocking instruction cannot be sent to the electronic cigarette. The prompt message for re-acquiring the user image information is sent to the display page of the selling terminal, and the user may re-enter the image information according to the prompt information. At the same time, the selling terminal records the number of times each time the user image information is acquired, for example, two times, three times, four times, etc.

At step S13, it is determined whether the number of times is greater than a preset threshold.

At step S131 ,if the number of times is greater than a preset threshold, the operation of acquiring user image information is limited.

In the embodiment, when it is detected that the number of times the user currently enters the image information is greater than the preset threshold, the operation that the user continues to enter the image information operation is limited, that is, limiting the image collecting device collecting the user image information. The user will be prompted to enter the image information again after a certain period of time.

In the embodiment, the selling terminal records the current number of times that user image information is acquired when being not within a preset age range; determines whether the number of times is greater than a preset threshold; and finally, limits the operation that the user enters the image information when the number of times is greater than a preset threshold; realizing that the operation that the user repeatedly enters the image is limited, thereby improving the safety of the electronic cigarette, and further limiting the hidden danger that the minors repeatedly enter the image to attempt to break so as to purchase the electronic cigarette.

Based on the first embodiment, the present invention provides a second embodiment of the selling method for an electronic cigarette based on face recognition of the present invention. In the embodiment, subsequent to step S131, the method further comprises:
step S30, determining whether to switch to the identity information verification mode.

In the embodiment, after the number of times that the image information is currently entered is equal to a preset threshold, the prompt information as to whether to switch to the identity verification mode is sent to the display page of the selling terminal, and the user may select to switch to the identity information verification mode according to the prompt information. The phenomenon that the user within a preset age range cannot purchase an electronic cigarette normally due to the fact that there is a face recognition error and the recognition fails to pass is effectively prevented.

At step S31, if switched to the identity information verification mode, the selling terminal acquires the identity information input by the user and matches the identity information with the standard identity information database to determine whether there is standard identity information matching the identity information in the standard identity information database.

Specifically, in the embodiment, after selecting the identity information verification mode, the user may select an entry category, such as an ID card, a driving license, a resident residence permit, and a resident Hong Kong and Macao passport, to enter corresponding identity information, such as an identity card number, a resident residence permit number, a driving license number, a resident Hong Kong and Macao passport number, etc. It is convenient for different users to enter identity information to prove that their age is within the preset range. At the same time, the identity information entered by the user is matched with the standard identity information database of the selected entry category.

At step S32, if there is standard identity information, the standard identity information is extracted and it is determined whether the age in the standard identity information is within a preset age range.

Herein, in the embodiment, when there is information matching the identity information entered by the user in the standard identity information database, the age in the standard identity information is extracted, and it is verified whether the age is within a preset age range. The phenomenon that the current user has information in the standard identity information database, but still does not satisfy the preset age range is effectively prevented.

At step S33, if the age in the standard identity information is within a preset age range, an instruction of approving selling the electronic cigarette is generated.

Herein, in the embodiment, if the age in the extracted standard identity information is within a preset age range, the selling terminal completes verification, and generates instruction of approving selling the electronic cigarette. The user may perform a corresponding operation, realizing approving sales in a plurality of manners, and effectively preventing the phenomenon that the user cannot purchase an electronic cigarette normally due to the fact that there is an error in the face recognition age estimating method.

It is to be understood that, in the actual application process, the step S30 is not limited to being operated after the step S131. For example, in other embodiments of the present invention, the user may directly select to enter the identity information verification mode, and the manner of performing step S30 falls also within the protection scope of the present invention.

Based on the second embodiment, a third embodiment of the selling method for an electronic cigarette based on face recognition of the present invention is provided. In the embodiment, prior to the step of extracting and determining whether the age in the standard identity information is within a preset age range in step S32, the method further comprises:
S321, acquiring, by the selling terminal, user image information, extracting facial feature information in the user image information, matching the facial feature information with the image information in the standard identity information, and determining whether the facial feature information and the image information belong to the same user;
step S322,if the facial feature information and the image information belong to the same user, extracting and determining whether the age in the standard identity information is within a preset age range; and
step S323,if the age in the standard identity information is within a preset age range, generating an instruction of approving selling the electronic cigarette.

Herein, in the embodiment, when there is identity information entered by the user in the standard user information database, the selling terminal starts the image information collecting device, acquires the current user image information, matches the facial feature information in the image information with the image information in the standard identity information, and determines whether the facial feature information and the image information belong to the same user. If the facial feature information and the image information belong to the same user, the subsequent steps in step S32 are performed. The phenomenon that the current user makes use of the identity information of others and the recognition passes after entry is effectively prevented.

It is to be understood that, in the actual application process, the step S321 is not limited to being performed prior to the step of extracting and determining whether the age in the standard identity information is within a preset age range in step S32; for example, in other embodiments of the present invention, the step S321 may also be performed before generating an instruction of approving selling the electronic cigarette after determining that the age information in the matched standard identity information is within a preset age range, the manner of preventing the phenomenon that the current user makes use of the identity information of others and the recognition passes after entry falls also within the protection scope of the present invention.

Specifically, in the embodiment, the specific step of step S321 "acquiring, by the selling terminal, user image information, extracting facial feature information in the user image information, matching the facial feature information with the image information in the standard identity information, and determining whether the facial feature information and the image information belong to the same user "comprises:
step S3211, initially extracting facial feature information in the user image information, and matching the facial feature information with the image information in the standard identity information to determine whether the facial feature information and the image information belong to the image information of the same user;
step S3212, if the facial feature information and the image information belong to the image information of the same user, extracting the dynamic information of the facial feature in the user image information again, and determining whether the dynamic information of the facial feature in the user image information is successfully extracted; and
step S3213,if the dynamic information is successfully extracted, determining that the facial feature information and the image information belong to the same user.

Herein, in the embodiment, the static feature information of the face is initially extracted, the current dynamic feature information of the user is acquired again after the comparison is successful, for example, the dynamic feature information such as blinking action, mouth opening action, etc. Alternatively, the body surface temperature may also be detected and compared with the normal temperature of the human body. The hidden danger that the current user makes use of the image information of others for verification so as to pass is effectively prevented. The phenomenon that the users who do not satisfy the age range break so as to use the electronic cigarette is further prevented.

Based on anyone of the first to third embodiments of the present invention, a fourth embodiment of the present invention is provided. In the embodiment, subsequent to the step of determining whether the age of the user is within a preset age range in step S10, the method further comprises :
step S50, if the age of the user is within a preset age range, determining whether the corresponding user image information is stored in the preset user database; and
step S51, if it is determined that the corresponding user image information is stored in the preset user database, forming a corresponding user information account in the preset database; wherein the preset database is used for directly matching the user image information acquired subsequently.

Further, prior to the step of analyzing the age of the user according to the facial feature information and determining whether the age of the user is within a preset age range when the selling terminal acquires the user image information after the user information account is established, the method further comprises:
step S52, determining whether there is a user information account matching the user image information acquired by the selling terminal in the preset database; and
step S521, if there is a user information account matching the user image information in the preset database, generating an instruction of approving selling the electronic cigarette.

Herein, in the embodiment, the storage of the selling terminal is further provided with a preset user database. When the age of the user is within a preset age range, the user may select to store the current corresponding user image information in the preset database, and establish a corresponding user information account. When the subsequent user uses again, only the user image information is used, and the facial feature information in the user image information is directly compared with the user information account in the preset database. If there is a corresponding user information account, an instruction of approving selling the electronic cigarette is generated without estimating the age, which effectively reduces the amount of computation of the selling terminal.

Based on the first to fourth embodiments, the present invention provides a fifth embodiment of the selling method for an electronic cigarette based on face recognition. In the embodiment, subsequent to the step of "generating an instruction of approving selling an electronic cigarette," the method further comprises:
step S70,switching a product display interface for the user to view the electronic cigarette product information and purchase the electronic cigarette according to the instruction of approving selling an electronic cigarette.

Herein, in the embodiment, if the selling terminal is an intelligent selling device having a product browsing interface, or an intelligent mobile terminal such as a PC or a smart phone that can be loaded into the product browsing interface, when the selling terminal acquires the instruction of approving selling an electronic cigarette, the user can view the product information of each electronic cigarette product, such as the product picture, power, price, performance parameters of the electronic cigarette, etc., by switching the product display interface, which effectively prevents minor users from understanding the information about electronic cigarette products and thereby generating curiosity and desire to purchase, further effectively preventing minors from purchasing electronic cigarettes to affect physical and mental health.

Based on the fifth embodiment, the present invention provides a sixth embodiment of the selling method for an electronic cigarette based on face recognition. In the embodiment, subsequent to the step S70 of "switching a product display interface for the user to view the electronic cigarette product information and purchase the electronic cigarette according to the instruction of approving selling an electronic cigarette," the method further comprises:
step S71,acquiring the browsing information of the user on the product display interface, and storing the browsed product information analysis to the user information account to generate user preference information;
step S72,if the user image information matching the user information account is acquired, generating an instruction of approving selling an electronic cigarette equipped with the user preference information, so that the product display interface preferably displays the product close to the user preference information.

Herein, in the embodiment, the preference information is generated by analyzing and storing the product information browsed by the user to the user information account. When the user image information matching the user information account is acquired again, an instruction of approving selling an electronic cigarette equipped with the user preference information is directly generated, so that when the product display interface is switched, the product information close to the user preference information is preferably displayed, thereby facilitating the user to select and purchase the product. Here, the browsed product information analysis is stored to the user information account, indicating that the information such as the size, operating parameters, type, color, and the like of the product information extracted from the browsed electronic cigarette product information is stored.

It is to be understood that, in another embodiment of the present invention, if the selling terminal is an ordinary counter device that does not have the function of the product browsing interface, for example, a device such as a vending machine, the purchase instruction of the user is first acquired. When the instruction of approving selling an electronic cigarette is acquired, the product is unlocked to complete the sale. Here, the locking method includes a physical structure locking such as a hatch, or moving the selected product from a position that the user cannot acquire to a position accessible to the user; or a communication lock may also be used. For example, an activation password is added to the electronic cigarette. If there is no activation password, the selling terminal cannot be used.

Based on the first to fourth embodiments, the present invention provides a seventh embodiment of the selling method for an electronic cigarette based on face recognition. In the embodiment, the selling terminal is an ordinary counter device that does not have the function of the product browsing interface, for example, a vending machine or a selling terminal that operates manually for a physical store. In the embodiment, subsequent to the step of "generating an instruction of approving selling an electronic cigarette," the method further comprises:
step S80, generating the billing information for the user to select the electronic cigarette according to the instruction of approving selling an electronic cigarette;
step S81,acquiring the payment information, comparing the payment information amount with the billing information, and determining whether the payment information amount is greater than or equal to the amount information in the billing information; and
step S82,if it is determined that the payment information amount is greater than or equal to the amount information in the bill information, selling the electronic cigarette product.

Herein, in the embodiment, since the selling terminal does not have the function of the product browsing interface, after the user selects the electronic cigarette product, the user is subjected to face recognition to determine whether the age of the user is within the preset age range. If the age of the user is within the preset age range, an instruction of approving selling an electronic cigarette is generated. When the selling terminal receives the instruction of approving selling an electronic cigarette, the billing information for the user to select the electronic cigarette is generated. After the user pays, the payment information amount is compared with the bill information amount. If the amount information in the payment information is greater than or equal to the amount in the bill information, the electronic cigarette product is sold and the corresponding change is performed. For example, the amount of the product bill information is 680 Yuan, the amount to be paid by the user is equal to 680 Yuan, and the electronic cigarette is normally sold. If the amount paid by the user is 700 Yuan, the electronic cigarette is sold normally, and the change is 20 Yuan.

Specifically, the payment information comprises cash payment information, card payment information, code scanning payment information, and digital currency payment information. Users can choose to use various methods to make payments, which is convenient for different groups to use and purchase.

Based on the fifth to seventh embodiments, the present invention provides an eighth embodiment of the selling method for an electronic cigarette based on face recognition. After the electronic cigarette product is sold according to the instruction of approving selling an electronic cigarette, the method further comprises:
step S90, generating a unique activation code corresponding to the electronic cigarette product;
step S91, acquiring, by the electronic cigarette, the unique activation code information, and determining whether the activation code information is consistent with the unique identification code information pre-stored by the electronic cigarette; and
step S92, if the activation code information is consistent with the unique identification code information pre-stored by the electronic cigarette, activating the electronic cigarette.

Herein, in the embodiment, the electronic cigarette pre-stores a unique identification code, which may be a unique product factory code or factory preset unique identification code information. When the information is not activated by the unique activation code, the electronic cigarette is locked and cannot be used normally. When the user determines that the age is within the preset age range through the above steps, after the user purchases the electronic cigarette by generating an instruction of approving selling an electronic cigarette, a unique activation code corresponding to the electronic cigarette product is generated. The user enters the electronic cigarette through the unique activation code to activate the electronic cigarette, which effectively prevents the merchant from directly selling the electronic cigarette without verifying the age of the purchaser, and further prevents the phenomenon that the minor purchases the electronic cigarette.

The present invention further provides a selling terminal of an electronic cigarette based on face recognition, wherein the selling terminal comprises an image collecting device, a user identity information input device, a user password information entering device, a storage, a processor, and a selling program of an electronic cigarette based on face recognition stored on the storage and operable on the processor, when the selling terminal is used as an execution subject of the selling method for an electronic cigarette based on face recognition. The program of selling an electronic cigarette implements the steps of the method executed by the selling terminal in the selling method for an electronic cigarette based on face recognition when being executed by the processor. Refer to the above embodiments for the specific steps of the selling method for an electronic cigarette based on face recognition. Since the selling terminal adopts all the technical solutions of all the above embodiments, at least all the beneficial effects brought by the technical solutions of the above embodiments are obtained, which will not be described in detail herein.

The present invention further provides a computer readable storage medium, wherein a program of selling an electronic cigarette based on face recognition is stored in the computer readable storage medium, wherein the program of selling an electronic cigarette based on face recognition implements the steps of the method executed by the selling terminal in the selling method for an electronic cigarette based on face recognition when being executed by the processor. Refer to the above embodiments for the specific steps of the selling method for an electronic cigarette based on face recognition. Since the computer readable storage medium adopts all the technical solutions of all the above embodiments, at least all the beneficial effects brought by the technical solutions of the above embodiments are obtained, which will not be described in detail herein.

The present invention further provides an electronic cigarette, wherein the electronic cigarette comprises an atomizing device and a battery device, the battery device comprises the electronic cigarette, including a storage device, a processing device, and an electronic cigarette activation program stored on the storage device and operable on the processing device, the unique identification code of the electronic cigarette is stored in the storage device. The electronic cigarette activation program implements the steps of the method executed by the electronic cigarette in the selling method for an electronic cigarette based on face recognition when being executed by the processing device. Refer to the above embodiments for the specific steps of the selling method for an electronic cigarette based on face recognition. Since the electronic cigarette adopts all the technical solutions of all the above embodiments, at least all the beneficial effects brought by the technical solutions of the above embodiments are obtained, which will not be described in detail herein.

Specifically, the atomizing device is provided with a receiving chamber in which the tobacco product is stored, an air flow passage in which the user smokes, and a heating component provided in the air flow passage. When the battery device is in the activation mode, the user may supply power to the atomizing device by controlling the battery device so that the heating component in the atomizing device heats the tobacco product stored in the receiving chamber to generate smoke for the user to smoke. Herein, the tobacco product comprises tobacco tar, cigarettes, tobacco shred, or tobacco paste, tobacco cartridge, etc., made by processing tobacco shred.

It is to be understood that the term "comprises", "includes", or any other variants thereof herein is intended to encompass a non-exclusive inclusion, such that a process, method, article, or system comprising a series of elements not only comprises those elements, but further comprises other elements that are not explicitly listed, or elements that are inherent to such a process, method, article, or system. An element defined by the phrase "comprising a..." does not exclude the presence of additional equivalent elements in the process, method, article, or system comprising the element without further limitation.

The serial numbers of the embodiments of the present invention described above are merely for the description, rather than representing that the embodiments are superior or inferior.

Through the description of the above embodiments, those skilled in the art may clearly understand that the above embodiment method may be implemented by means of software plus a necessary general hardware platform, and of course, and may also be implemented by means of hardware, but in many cases, the former is a better implementation. Based on such understanding, the technical solution of the present invention in essence or the part contributing to the prior art may be embodied in the form of a software product stored in a storage medium (such as ROM/RAM, a disk, and an optical disk), comprising several instructions for causing a terminal device (which may be a mobile phone, a computer, a server, an air conditioner, or a network device, etc.) to execute the methods described in various embodiments of the present invention.

The above are preferred embodiments of the present invention merely and are not intended to limit the patent scope of the present invention. Any equivalent structures made according to the description and the accompanying drawings of the present invention without departing from the idea of the present invention, or any equivalent structures applied in other relevant technical fields directly or indirectly are intended to be comprised in the patent protection scope of the present invention.

## Claims

1. A selling method for an electronic cigarette based on face recognition, the selling method comprising the steps of:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette.

2. The selling method for an electronic cigarette according to claim 1, wherein the step of extracting facial feature information in user image information, analyzing the age of the user according to the facial feature information, and determining whether the age of the user is within a preset age range further comprises:
if the age of the user is not within a preset age range, recording the current number of times that user image information is acquired;
determining whether the number of times is greater than a preset threshold; and
if the number of times is greater than a preset threshold, limiting the operation of acquiring user image information.

3. The selling method for an electronic cigarette according to claim 1, wherein
it is determined whether the age of the user is within the preset age range; if the age of the user is not within the preset age range, it is determined whether to switch to the identity information verification mode;
if switched to the identity information verification mode, the user identity information is acquired and the user identity information is matched with the standard identity information database, it is determined whether there is standard identity information matching the user identity information in the standard identity information database;
if there is standard identity information, the standard identity information is extracted and it is determined whether the age in the standard identity information is within a preset age range; and
if the age in the standard identity information is within a preset age range, an instruction of approving selling an electronic cigarette is generated.

4. The selling method for an electronic cigarette according to claim 3, wherein
the standard identity information database comprises: a resident identity card information database, a resident driving license database, a resident residence permit database, and a resident Hong Kong and Macao passport database.

5. The selling method for an electronic cigarette according to claim 3, wherein prior to the step of extracting and determining whether the age in the standard identity information is within a preset age range, the method further comprises:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of approving selling an electronic cigarette.

6. The selling method for an electronic cigarette according to claim 5, wherein the step of acquiring user image information, extracting facial feature information in the user image information, matching the facial feature information with the image information in the standard identity information, and determining whether the facial feature information and the image information belong to the same user comprises:
initially extracting facial feature information in the user image information, and matching the facial feature information with the image information in the standard identity information to determine whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

7. The selling method for an electronic cigarette according to claim 6, wherein
the dynamic information comprises a blinking motion, a mouth opening motion, and a body surface temperature of the face of the user.

8. The selling method for an electronic cigarette according to any one of claims 1 to 7, wherein subsequent to the step of determining whether the age of the user is within a preset age range, the method further comprises:
if the age of the user is within a preset age range, determining whether the corresponding user image information is stored in the preset user database; and
if it is determined that the corresponding user image information is stored in the preset user database, forming a corresponding user information account in the preset database; wherein the preset database is used for directly matching the user image information acquired subsequently.

9. The selling method for an electronic cigarette according to claim 8, wherein prior to the step of analyzing the age of the user according to the facial feature information and determining whether the age of the user is within a preset age range, the method further comprises:
determining whether there is a user information account matching the acquired user image information in the preset database; and
if there is a user information account matching the user image information in the preset database, generating an instruction of approving selling an electronic cigarette.

10. The selling method for an electronic cigarette according to claim 8, wherein
a product display interface is switched for the user to view the electronic cigarette product information and purchase the electronic cigarette according to the instruction of approving selling an electronic cigarette.

11. The selling method for an electronic cigarette according to claim 10, wherein
the browsing information of the user on the product display interface is acquired, and the browsed product information analysis is stored to the user information account to generate user preference information;
if the user image information matching the user information account is acquired, an instruction of approving selling an electronic cigarette equipped with the user preference information is generated, so that the product display interface preferably displays the product close to the user preference information.

12. The selling method for an electronic cigarette according to claim 1, wherein
the billing information for the user to select the electronic cigarette is generated according to the instruction of approving selling an electronic cigarette;
the payment information is acquired, the payment information amount is compared with the billing information, and it is determined whether the payment information amount is greater than or equal to the amount information in the billing information; and
if it is determined that the payment information amount is greater than or equal to the amount information in the bill information, the electronic cigarette product is sold.

13. The selling method for an electronic cigarette according to any one of claims 10 to 12, wherein
after the electronic cigarette product is sold, a unique activation code corresponding to the electronic cigarette product is generated;
the electronic cigarette acquires the unique activation code information, and determines whether the activation code information is consistent with the unique identification code information pre-stored by the electronic cigarette; and
if the activation code information is consistent with the unique identification code information pre-stored by the electronic cigarette, the electronic cigarette is activated.

14. A selling terminal for an electronic cigarette based on face recognition, wherein the selling terminal comprises a user image information collecting device, a storage, and a processor, wherein the storage is configured for storing a program of a selling method for electronic cigarette, when the program is executed by the processor, the program implements the steps of the selling method for an electronic cigarette according to any one of claims 1 to 13.

15. A computer readable storage medium, wherein the computer readable storage medium is configured for storing a program of unlocking an electronic cigarette, and when being executed by the processor, the program of unlocking the electronic cigarette implements the steps of the selling method for an electronic cigarette according to any one of claims 1 to 13.

16. An electronic cigarette, wherein the electronic cigarette comprises a storage device, a processing device and an electronic cigarette activation program stored on the storage device and operable on the processing device, the unique identification code of the electronic cigarette is stored in the storage device, and when being executed by the processing device, the electronic cigarette activation program implements the steps of the selling method for an electronic cigarette according to any one of claims 1 to 13.

## Amended claims

### Amended claims in accordance with Rule 137(2) EPC.

1. A selling method for an electronic cigarette based on face recognition, the selling method comprising the steps of:
acquiring image information of a user, extracting facial feature information from the image information of the user, analyzing an age of the user according to the facial feature information;
determining whether the age of the user is within a preset age range; and
if the user is within the preset age range, generating an instruction of approving selling the electronic cigarette;
**characterized in that**:
wherein the step of extracting facial feature information in user image information, analyzing the age of the user according to the facial feature information, and determining whether the age of the user is within a preset age range further comprises:
if the age of the user is not within a preset age range, recording the current number of times that user image information is acquired;
determining whether the number of times is greater than a preset threshold; and
if the number of times is greater than a preset threshold, limiting the operation of acquiring user image information.

2. The selling method for an electronic cigarette according to claim 1, wherein
it is determined whether the age of the user is within the preset age range; if the age of the user is not within the preset age range, it is determined whether to switch to the identity information verification mode;
if switched to the identity information verification mode, the user identity information is acquired and the user identity information is matched with the standard identity information database, it is determined whether there is standard identity information matching the user identity information in the standard identity information database;
if there is standard identity information, the standard identity information is extracted and it is determined whether the age in the standard identity information is within a preset age range; and
if the age in the standard identity information is within a preset age range, an instruction of approving selling an electronic cigarette is generated.

3. The selling method for an electronic cigarette according to claim 2, wherein
the standard identity information database comprises: a resident identity card information database, a resident driving license database, a resident residence permit database, and a resident Hong Kong and Macao passport database.

4. The selling method for an electronic cigarette according to claim 2, wherein prior to the step of extracting and determining whether the age in the standard identity information is within a preset age range, the method further comprises:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of approving selling an electronic cigarette.

5. The selling method for an electronic cigarette according to claim 4, wherein the step of acquiring user image information, extracting facial feature information in the user image information, matching the facial feature information with the image information in the standard identity information, and determining whether the facial feature information and the image information belong to the same user comprises:
initially extracting facial feature information in the user image information, and matching the facial feature information with the image information in the standard identity information to determine whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

6. The selling method for an electronic cigarette according to claim 5, wherein
the dynamic information comprises a blinking motion, a mouth opening motion, and a body surface temperature of the face of the user.

7. The selling method for an electronic cigarette according to any one of claims 1 to 6, wherein subsequent to the step of determining whether the age of the user is within a preset age range, the method further comprises:
if the age of the user is within a preset age range, determining whether the corresponding user image information is stored in the preset user database; and
if it is determined that the corresponding user image information is stored in the preset user database, forming a corresponding user information account in the preset database; wherein the preset database is used for directly matching the user image information acquired subsequently.

8. The selling method for an electronic cigarette according to claim 7, wherein prior to the step of analyzing the age of the user according to the facial feature information and determining whether the age of the user is within a preset age range, the method further comprises:
determining whether there is a user information account matching the acquired user image information in the preset database; and
if there is a user information account matching the user image information in the preset database, generating an instruction of approving selling an electronic cigarette.

9. The selling method for an electronic cigarette according to claim 7, wherein
a product display interface is switched for the user to view the electronic cigarette product information and purchase the electronic cigarette according to the instruction of approving selling an electronic cigarette.

10. The selling method for an electronic cigarette according to claim 9, wherein
the browsing information of the user on the product display interface is acquired, and the browsed product information analysis is stored to the user information account to generate user preference information;
if the user image information matching the user information account is acquired, an instruction of approving selling an electronic cigarette equipped with the user preference information is generated, so that the product display interface preferably displays the product close to the user preference information.

11. The selling method for an electronic cigarette according to claim 1, wherein
the billing information for the user to select the electronic cigarette is generated according to the instruction of approving selling an electronic cigarette;
the payment information is acquired, the payment information amount is compared with the billing information, and it is determined whether the payment information amount is greater than or equal to the amount information in the billing information; and
if it is determined that the payment information amount is greater than or equal to the amount information in the bill information, the electronic cigarette product is sold.

12. The selling method for an electronic cigarette according to claim 11, wherein the payment information comprises cash payment information, card payment information, code scanning payment information, and digital currency payment information.

13. The selling method for an electronic cigarette according to any one of claims 9 to 11, wherein
after the electronic cigarette product is sold, a unique activation code corresponding to the electronic cigarette product is generated;
the electronic cigarette acquires the unique activation code information, and determines whether the activation code information is consistent with the unique identification code information pre-stored by the electronic cigarette; and
if the activation code information is consistent with the unique identification code information pre-stored by the electronic cigarette, the electronic cigarette is activated.

14. A selling terminal for an electronic cigarette based on face recognition, wherein the selling terminal comprises a user image information collecting device, a storage, and a processor, wherein the storage is configured for storing a program of a selling method for electronic cigarette, when the program is executed by the processor, the program implements the steps of the selling method for an electronic cigarette according to any one of claims 1 to 13.

15. A computer readable storage medium, wherein the computer readable storage medium is configured for storing a program of unlocking an electronic cigarette, and when being executed by the processor, the program of unlocking the electronic cigarette implements the steps of the selling method for an electronic cigarette according to any one of claims 1 to 13.

16. An electronic cigarette, wherein the electronic cigarette comprises a storage device, a processing device and an electronic cigarette activation program stored on the storage device and operable on the processing device, the unique identification code of the electronic cigarette is stored in the storage device, and when being executed by the processing device, the electronic cigarette activation program implements the steps of the selling method for an electronic cigarette according to any one of claims 1 to 13.
